# EUROPEAN PATENT APPLICATION

(11) **EP 3 316 171 A1**
(43) Date of publication of application: **02.05.2018**
(21) Application number: 17199067.4
(22) Date of filing: 29.10.2017
(51) Int. Cl.: G06F 21/57

(54) **APPARATUS AND METHOD FOR DYNAMIC BINARY ANALYSIS ON HARDWARE BOARD**

(30) Priority: 01.11.2016 KR 20160144772
(71) Applicant: Electronics and Telecommunications Research Institute, Daejeon 34129 (KR)
(72) Inventor: CHOI, Byeong-Cheol, Daejeon 34021 (KR); PARK, Jong-Seop, Daejeon 34195 (KR); JIN, Seung-Hun, Daejeon 35212 (KR)
(74) Representative: Betten & Resch

(57) **Abstract**

Disclosed herein are an apparatus and method for dynamic binary analysis on a hardware board. The method for dynamic binary analysis on a hardware board is performed using an apparatus for dynamic binary analysis on the hardware board, and includes generating information required for dynamic binary analysis based on information collected while interfacing with an embedded device, disassembling, by a software processing unit, the information required for dynamic binary analysis by receiving the information from a hardware processing unit while interfacing with the hardware processing unit, selecting a core platform of the embedded device based on results of the disassembly, and analyzing security vulnerabilities in the embedded device by performing dynamic binary analysis of the core platform.

## Description

### BACKGROUND OF THE INVENTION

### 1. Technical Field

The present invention relates generally to embedded security technology, and more particularly to technology for analyzing security vulnerabilities in an embedded device.

### 2. Description of the Related Art

The term "embedded devices and systems" denotes devices and systems in which software for executing a preset specific function is embedded in each of microprocessors installed in various types of electronic products and information devices, in addition to normal Personal Computers (PCs).

Recently, with the rapid growth of the Information Technology (IT) industry, such embedded software and embedded hardware technology has become an essential factor in advanced technology fields, such as the Internet of Things (IoT), ubiquitous computing, digital convergence, and mobile intelligence.

Therefore, robust security measures of embedded systems, which correspond to the development of the embedded industry and the growth of advanced technology, are currently required.

Recently, an existing hardware-based In-Circuit Debugger (ICD) device for analyzing security vulnerabilities in embedded devices is a debugging-centered device, in which the analysis of security vulnerabilities may be conducted by the effort of skilled professionals.

Further, an existing software-based Dynamic Binary Analysis (DBA) device may be installed on a specific device, and may then partially analyze security vulnerabilities in an embedded device.

However, since it is difficult to operate a DBA device for analyzing security vulnerabilities in an embedded device in conjunction with an ICD device, there are limitations in that it remains time-consuming to analyze security vulnerabilities and in that it is not easy to find skilled professionals therefor.

Meanwhile, there is Korean Patent Application Publication No. 10-2016-0074028 entitled "Embedded Security Framework Based on Context-Aware Encryption for Securing Traceability of Industrial Confidential Information in Internet of Things". This patent discloses a security-enhanced Internet-of Things (IoT) embedded system, which presents a framework standard that enables the design of all embedded devices connected to an IoT network composed of heterogeneous nodes that can be applied to an industrial environment, thus preemptively blocking attempts to make unauthorized hacking attacks that are realized through access to the IoT network, or attempts to leak internal large-scale confidential materials.

However, Korean Patent Application Publication No. 10-2016-0074028 does not present a method of analyzing security vulnerabilities in embedded devices.

### SUMMARY OF THE INVENTION

Accordingly, the present invention has been made keeping in mind the above problems occurring in the prior art, and an object of the present invention is to provide a method for dynamic binary analysis on a hardware board in order to analyze security vulnerabilities in an IT device.

Another object of the present invention is to integrate an existing In-Circuit Debugger (ICD) device with a Dynamic Binary Analysis (DBA) device so that they operate in conjunction with each other by adding a module which combines the existing ICD device with the DBA device, thus analyzing security vulnerabilities in an embedded device.

A further object of the present invention is to provide an integrated framework for solving problems such as insufficiency of skilled professionals, limited analysis time, the requirement for the understanding of various individual devices, and the acquisition of usage methods, upon analyzing security vulnerabilities in an embedded device.

In accordance with an aspect of the present invention to accomplish the above objects, there is provided a method for dynamic binary analysis on a hardware board, the method being performed using an apparatus for dynamic binary analysis on the hardware board, including generating information required for dynamic binary analysis based on information collected while interfacing with an embedded device; disassembling, by a software processing unit, the information required for dynamic binary analysis by receiving the information from a hardware processing unit while interfacing with the hardware processing unit; selecting a core platform of the embedded device based on results of the disassembly; and analyzing security vulnerabilities in the embedded device by performing dynamic binary analysis of the core platform.

Generating the information may be configured to generate core information, registry information, and binary information of the embedded device based on the collected information.

The core information may include type information and detailed information on a Central Processing Unit (CPU) of the embedded device.

The registry information may be registry information stored in flash memory of the embedded device and includes information about a number of registers used by the CPU of the embedded device and initial values of the registers.

The binary information may be generated by collecting binaries stored in Synchronous Dynamic Random Access Memory (SDRAM) of the embedded device.

Generating the information may be configured to generate the core information, the registry information, and the binary information, which are required for dynamic binary analysis, based on information collected by the apparatus for dynamic binary analysis from the CPU, the flash memory, and the SDRAM of the embedded device while interfacing with the embedded device using a debugging device.

Disassembling the information may be configured to perform the disassembly in order for a bare machine platform to interpret the core information, the registry information, and the binary information.

Selecting the core platform may be configured to select the core platform of the embedded device by mapping results of the disassembly to pieces of platform information pre-stored in the bare machine platform.

Analyzing security vulnerabilities may be configured to analyze security vulnerabilities in the embedded device by performing dynamic binary analysis using both a taint analysis technique and a concolic execution technique for the core platform.

Analyzing security vulnerabilities may be configured to perform at least one of analysis of security vulnerabilities and verification of secure coding by performing taint analysis of the core platform based on a vulnerability database and a secure coding database.

In accordance with an aspect of the present invention to accomplish the above objects, there is provided an apparatus for dynamic binary analysis, including a hardware processing unit for generating information required for dynamic binary analysis from information collected from an embedded device; and a software processing unit for selecting a core platform of the embedded device by disassembling the information required for dynamic binary analysis, and for analyzing security vulnerabilities in the embedded device through dynamic binary analysis of the core platform.

The hardware processing unit may include an information generation unit for generating the information required for dynamic binary analysis from the information collected while interfacing with the embedded device; and a hardware interface unit for delivering the information required for dynamic binary analysis to the software processing unit while interfacing with the software processing unit.

The software processing unit may include a software interface unit for receiving the information required for dynamic binary analysis from the hardware processing unit while interfacing with the hardware processing unit; an interpretation unit for disassembling the information required for dynamic binary analysis; a selection unit for selecting the core platform based on results of the disassembly; and an analysis unit for analyzing security vulnerabilities in the embedded device through dynamic binary analysis of the core platform.

The information generation unit may generate core information, registry information, and binary information of the embedded device based on the collected information.

The information generation unit may be configured to generate the core information, the registry information, and the binary information, which are required for dynamic binary analysis, based on information collected by the apparatus for dynamic binary analysis from a CPU, flash memory, and SDRAM of the embedded device while interfacing with the embedded device using a debugging device.

The information interpretation unit may perform the disassembly in order for a bare machine platform to interpret the core information, the registry information, and the binary information.

The selection unit may be configured to select the core platform of the embedded device by mapping results of the disassembly to pieces of platform information pre-stored in the bare machine platform.

The selection unit may be configured to select, as the core platform of the embedded device, a matching core platform obtained by individually mapping core information of the CPU, registry information of the flash memory, and binary information of the SDRAM to each of the pieces of platform information.

The analysis unit may analyze security vulnerabilities in the embedded device by performing dynamic binary analysis using both a taint analysis technique and a concolic execution technique for the core platform.

The analysis unit may perform at least one of analysis of security vulnerabilities and verification of secure coding by performing taint analysis of the core platform based on a vulnerability database and a secure coding database.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a block diagram illustrating an apparatus for dynamic binary analysis on a hardware board according to an embodiment of the present invention;
FIG. 2 is a block diagram illustrating in detail an example of the hardware processing unit illustrated in FIG. 1;
FIG. 3 is a block diagram illustrating in detail an example of the software processing unit illustrated in FIG. 1;
FIG. 4 is an operation flowchart illustrating a method for dynamic binary analysis on a hardware board according to an embodiment of the present invention;
FIG. 5 is a diagram illustrating in detail an apparatus for dynamic binary analysis on a hardware board, which analyzes security vulnerabilities in an embedded device, according to an embodiment of the present invention; and
FIG. 6 is a block diagram illustrating a computer system according to an embodiment of the present invention.

### DESCRIPTION OF THE PREFERRED EMBODIMENTS

The present invention will be described in detail below with reference to the accompanying drawings. Repeated descriptions and descriptions of known functions and configurations which have been deemed to make the gist of the present invention unnecessarily obscure will be omitted below. The embodiments of the present invention are intended to fully describe the present invention to a person having ordinary knowledge in the art to which the present invention pertains. Accordingly, the shapes, sizes, etc. of components in the drawings may be exaggerated to make the description clearer.

In the present specification, it should be understood that terms such as "include" or "have" are merely intended to indicate that features, numbers, steps, operations, components, parts, or combinations thereof are present, and are not intended to exclude the possibility that one or more other features, numbers, steps, operations, components, parts, or combinations thereof will be present or added.

Hereinafter, preferred embodiments of the present invention will be described in detail with reference to the attached drawings.

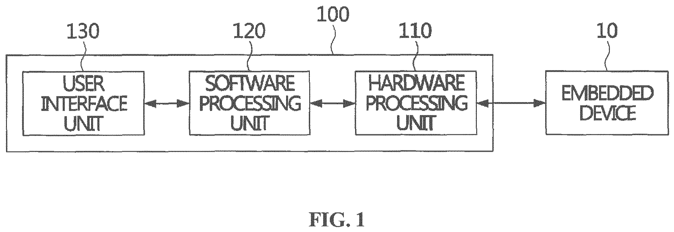

FIG. 1 is a block diagram illustrating an apparatus for dynamic binary analysis on a hardware board according to an embodiment of the present invention.

Referring to FIG. 1, an apparatus 100 for dynamic binary analysis on a hardware board (hereinafter also referred to as a "dynamic binary analysis apparatus 100") according to an embodiment of the present invention includes a hardware processing unit 110, a software processing unit 120, and a user interface unit 130.

In accordance with an embodiment of the present invention, the dynamic binary analysis apparatus 100 may provide dynamic binary analysis on the hardware board while the hardware processing unit 110, corresponding to a hardware part, and the software processing unit 120, corresponding to a software part, interface with each other.

The hardware processing unit 110 may generate information required for dynamic binary analysis from information collected from an embedded device 10.

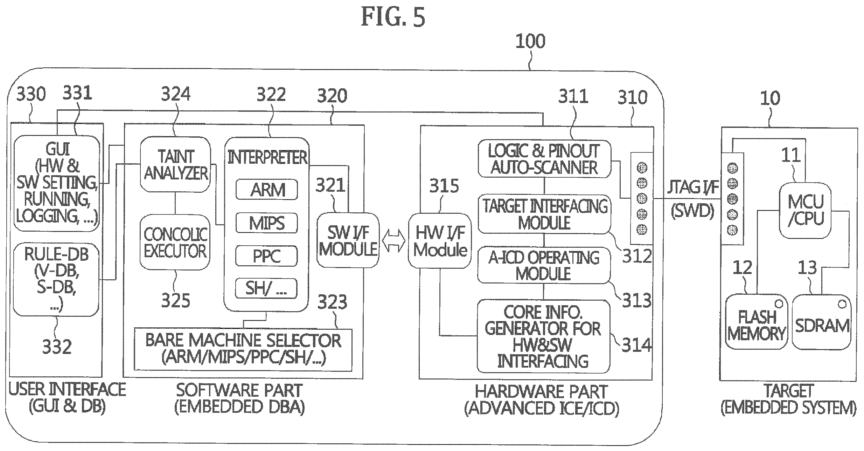

Here, the hardware processing unit 110 may correspond to the hardware part (e.g. advanced In-Circuit Emulator/In-Circuit Debugger (ICE/ICD) device) 310 (see FIG. 5) of the dynamic binary analysis apparatus 100.

That is, referring to FIG. 5, the hardware processing unit 110 may correspond to the advanced ICE/ICD device 310, which includes a logic & pinout auto-scanner 311, a target interfacing module 312, an Advanced-ICD (A-ICD) operating module 313, a core information (Info) generator 314, and a hardware interface (HW I/F) module 315.

The logic & pinout auto-scanner 311 may interface with the embedded device 10 by automatically scanning the embedded device 10 using a Joint Test Action Group (JTAG) I/F (Serial Wire Debug: SWD I/F).

Referring to FIG. 5, the target interfacing module 312 may interface with the CPU 11, the flash memory 12, and the Synchronous Dynamic Random Access Memory (SDRAM) 13 of the embedded device 10.

The A-ICD operating module 313 may perform the overall operation of the advanced ICE/ICD device.

The JTAG I/F (SWD I/F) may be the debugging device that interfaces with the embedded device 10 based on JTAG.

The hardware processing unit 110 may interface with the embedded device 10 based on JTAG using the debugging device.

Here, the debugging device may be any of various devices interfacing with the embedded device 10.

For example, the JTAG I/F (SWD I/F), that is, the debugging device, may generate a boundary cell in a chip, may be connected at pins thereof to external pins in a one-to-one correspondence, may generate a channel, and may then connect the dynamic binary analysis apparatus 100 to the embedded device 10 through the channel.

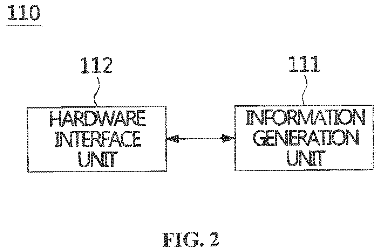

Further, referring to FIG. 2, the hardware processing unit 110 may include an information generation unit 111 and a hardware interface unit 112.

The information generation unit 111 may generate core information, registry information, and binary information, which are required for dynamic binary analysis, from information collected while interfacing with the embedded device 10.

Here, the information generation unit 111 may correspond to the core information generator 314.

Here, the core information may be type information and detailed information on the CPU 11 of the embedded device 10, and may be indicated by CORE_Info.

The registry information may be register information required for dynamic binary analysis, and may be indicated by REG_Info.

REG_Info may include information about the initial value of an identified core.

Here, REG_Info may be collected registry information stored in the flash memory 12 of the embedded device 10.

For example, when the identified core platform is an Advanced Reduced instruction set computing (RISC) Machine (ARM), REG_Info may include information indicating that a core uses 16 registers, and may also include information about the initial values of the 16 registers.

Here, the binary information may be binary information required for dynamic analysis, and may be indicated by RAM_dump_binary.

RAM_dump_binary may be information that is generated by the information generation unit 111 by collecting binaries (binary code or files) in the SDRAM 13 of the embedded device 10.

That is, the information generation unit 111 may generate the core information, the registry information, and the binary information, which are required for dynamic binary analysis, using information that is collected by the dynamic binary analysis apparatus 100 from the CPU 11, the flash memory 12, and the SDRAM 13 of the embedded device 10 while interfacing with the embedded device 10 using the debugging device.

The hardware interface unit 112 may deliver the core information, the registry information, and the binary information to the software processing unit 120 while interfacing with the software processing unit 120.

The hardware interface unit 112 may correspond to the hardware interface (HW I/F) module 315.

The hardware interface unit 112 may deliver the core information CORE_Info, registry information REG_Info, and the binary information RAM_dump_binary to the software processing unit 120 using any one of serial communication, Transmission Control Protocol (TCP)/Internet Protocol (IP) socket networking, and a Remote Procedure Call (RPC).

The software processing unit 120 may select the core platform of the embedded device 10 by disassembling the core information, the registry information, and the binary information, and may analyze security vulnerabilities in the embedded device 10 through dynamic binary analysis of the core platform.

Referring to FIG. 5, the software processing unit 120 may be an embedded DBA device 320 that includes a software interface (SW I/F) module 321, an interpreter 322, and a bare machine selector 323.

Referring to FIG. 5, the embedded DBA device 320 may further include a taint analyzer 324 and a concolic executer 325.

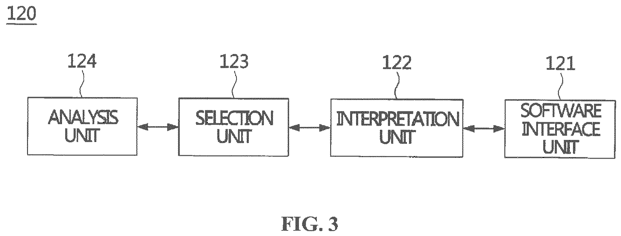

Further, referring to FIG. 3, the software processing unit 120 may include a software interface unit 121, an interpretation unit 122, a selection unit 123, and an analysis unit 124.

The software interface unit 121 may receive the core information, the registry information, and the binary information from the hardware processing unit 110 while interfacing with the hardware processing unit 110.

Here, the software interface unit 121 may correspond to the SW I/F module 321.

The software interface unit 121 may receive the core information CORE_Info, the registry information REG_Info, and the binary information RAM_dump_binary from the hardware processing unit 110 using any one of serial communication, TCP/IP socket networking, and a Remote Procedure Call (RPC).

The interpretation unit 122 may disassemble the core information, the registry information, and the binary information, and may then play important roles in interpreting core instructions and in determining a bare machine based on the results of the disassembly.

Here, the interpretation unit 122 may be the interpreter 322 of FIG. 5.

The interpretation unit 122 may interpret embedded core platforms such as Advanced RISC Machine (ARM), MIPS, PowerPC (PPC), and SuperH (SH) platforms.

The interpretation unit 122 may perform disassembly in order for the bare machine platform to interpret the core information, the registry information, and the binary information.

The selection unit 123 may select the core platform based on the results of the disassembly.

Here, the selection unit 123 may select the core platform of the embedded device 10 by mapping the results of the disassembly to pieces of platform information pre-stored in the bare machine platform.

The core platform that can be selected by the selection unit 123 may be any of embedded core platforms, such as ARM, MIPS, PPC and SH platforms.

The selection unit 123 may dynamically select the core platform of the bare machine platform while operating in conjunction with the interpretation unit 122.

That is, the selection unit 123 may select, as the core platform of the embedded device 10, a matching core platform obtained by individually mapping the core information of the CPU 11, the registry information of the flash memory 12, and the binary information of the SDRAM 13 to each of the pieces of platform information.

Furthermore, the selection unit 123 may be the bare machine selector 323 of FIG. 5.

The analysis unit 124 may analyze security vulnerabilities in the embedded device through dynamic binary analysis of the core platform.

In this case, the analysis unit 124 may analyze security vulnerabilities in the embedded device by performing dynamic binary analysis using both a taint analysis technique and a concolic execution technique for the core platform.

The concolic execution technique may include a symbolic execution technique and a concrete execution technique.

Further, referring to FIG. 5, the analysis unit 124 may include the taint analyzer 324 for performing a taint analysis technique and the concolic executor 325 for performing a concolic execution technique.

The user interface unit 130 may display dynamic binary analysis information and the analysis procedure thereof to a user, and may control the dynamic binary analysis apparatus 100 while interacting with the user.

Here, the user interface unit 130 may correspond to the user interface part 330 of FIG. 5.

Further, referring to FIG. 5, the user interface unit 130 may include a Graphical User Interface (GUI) module 331 and a rule-DB module 332.

The GUI module 331 may display and perform the setting, running, and logging of hardware and software.

The rule-DB module 332 may include a DB for analyzing security vulnerabilities and verifying secure coding.

Here, the rule-DB module 332 may include a Vulnerability Database (V-DB) and a Secure coding DB (S-DB).

The V-DB may include DBs for analyzing security vulnerabilities for respective core platforms.

The S-DB may include DBs for verifying secure coding for respective core platforms.

Therefore, the taint analyzer 324 may analyze security vulnerabilities using the V-DB or verify secure coding using the S-DB, with respect to an identified core while operating in conjunction with the rule-DB module 332.

That is, the apparatus 100 for dynamic binary analysis on a hardware board (i.e. ICE-DBA apparatus) may directly interface with the embedded device 10 via hardware through the hardware processing unit 110, may generate information required for dynamic binary analysis from dynamically collected information, and may analyze security vulnerabilities through the software processing unit 120.

By means of this operation, the analysis of security vulnerabilities in the embedded device 10 may be more simplified and may be more rapidly performed.

FIG. 2 is a block diagram illustrating in detail an example of the hardware processing unit illustrated in FIG. 1.

Referring to FIG. 2, the hardware processing unit 110 may include an information generation unit 111 and a hardware interface unit 112.

The information generation unit 111 may generate core information, registry information, and binary information, which are required for dynamic binary analysis, from information collected while interfacing with an embedded device 10.

Here, the information generation unit 111 may correspond to the core information generator 314 of FIG. 5.

Here, the core information may be type information and detailed information on the CPU 11 of the embedded device 10 (see FIG. 5), and may be indicated by CORE_Info.

The registry information may be register information required for dynamic binary analysis, and may be indicated by REG_Info.

REG_Info may include information about the initial value of an identified core.

Here, REG_Info may be collected registry information stored in the flash memory 12 of the embedded device 10 (see FIG. 5).

For example, when an identified core platform is an Advanced Reduced instruction set computing (RISC) Machine (ARM), REG_Info may include information indicating that a core uses 16 registers, and may also include information about the initial values of the 16 registers.

Here, the binary information may be binary information required for dynamic analysis, and may be indicated by RAM_dump_binary.

RAM_dump_binary may be information that is generated by the information generation unit 111 by collecting binaries (binary code or files) in the SDRAM 13 of the embedded device 10 (see FIG. 5).

That is, the information generation unit 111 may generate the core information, the registry information, and the binary information, which are required for dynamic binary analysis, using information that is collected by the dynamic binary analysis apparatus 100 from the CPU 11, the flash memory 12, and the SDRAM 13 of the embedded device 10 while interfacing with the embedded device 10 using the debugging device.

The hardware interface unit 112 may deliver the core information, the registry information, and the binary information to the software processing unit 120 while interfacing with the software processing unit 120.

The hardware interface unit 112 may correspond to the hardware interface (HW I/F) module 315 of FIG. 5.

The hardware interface unit 112 may deliver the core information CORE_Info, registry information REG_Info, and the binary information RAM_dump_binary to the software processing unit 120 using any one of serial communication, Transmission Control Protocol (TCP)/Internet Protocol (IP) socket networking, and a Remote Procedure Call (RPC).

FIG. 3 is a block diagram illustrating in detail an example of the software processing unit illustrated in FIG. 1.

Referring to FIG. 3, the software processing unit 120 may include a software interface unit 121, an interpretation unit 122, a selection unit 123, and an analysis unit 124.

The software processing unit 120 may select the core platform of the embedded device 10 by disassembling the core information, the registry information, and the binary information, and may analyze security vulnerabilities in the embedded device 10 through dynamic binary analysis of the core platform.

The software interface unit 121 may receive the core information, the registry information, and the binary information from the hardware processing unit 110 while interfacing with the hardware processing unit 110.

Here, the software interface unit 121 may correspond to the SW I/F module 321.

The software interface unit 121 may receive the core information CORE_Info, the registry information REG_Info, and the binary information RAM_dump_binary from the hardware processing unit 110 using any one of serial communication, TCP/IP socket networking, and a Remote Procedure Call (RPC).

The interpretation unit 122 may disassemble the core information, the registry information, and the binary information, and may then play important roles in interpreting core instructions and in determining a bare machine based on the results of the disassembly.

Here, the interpretation unit 122 may be the interpreter 322 of FIG. 5.

The interpretation unit 122 may interpret embedded core platforms such as Advanced RISC Machine (ARM), MIPS, PowerPC (PPC), and SuperH (SH) platforms.

The interpretation unit 122 may perform disassembly in order for the bare machine platform to interpret the core information, the registry information, and the binary information.

The selection unit 123 may select the core platform based on the results of the disassembly.

Here, the selection unit 123 may identify the core of the embedded device 10 based on the results of the disassembly.

Here, the selection unit 123 may select the core platform of the embedded device 10 by mapping the results of the disassembly to pieces of platform information pre-stored in the bare machine platform.

The core platform that can be selected by the selection unit 123 may be any of embedded core platforms, such as ARM, MIPS, PPC and SH platforms.

The selection unit 123 may dynamically select the core platform of the bare machine platform while operating in conjunction with the interpretation unit 122.

That is, the selection unit 123 may select, as the core platform of the embedded device 10, a matching core platform obtained by individually mapping the core information of the CPU 11, the registry information of the flash memory 12, and the binary information of the SDRAM 13 to each of the pieces of platform information.

Furthermore, the selection unit 123 may be the bare machine selector 323 of FIG. 5.

The analysis unit 124 may analyze security vulnerabilities in the embedded device through dynamic binary analysis of the core platform.

In this case, the analysis unit 124 may analyze security vulnerabilities in the embedded device by performing dynamic binary analysis using both a taint analysis technique and a concolic execution technique for the core platform.

The concolic execution technique may include a symbolic execution technique and a concrete execution technique.

Further, referring to FIG. 5, the analysis unit 124 may include a taint analyzer 324 for performing a taint analysis technique and a concolic executor 325 for performing a concolic execution technique.

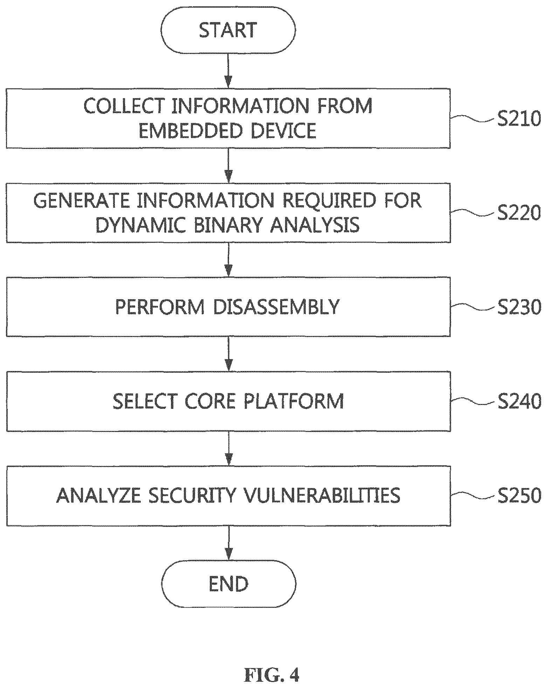

FIG. 4 is an operation flowchart illustrating a method for dynamic binary analysis on a hardware board according to an embodiment of the present invention.

Referring to FIG. 4, the method for dynamic binary analysis on a hardware board according to an embodiment of the present invention first collects information from an embedded device at step S210.

That is, at step S210, information required for dynamic binary analysis may be generated from the information collected from the embedded device 10.

Here, at step S210, interfacing with the embedded device 10 may be performed using a debugging device.

For example, at step S210, the logic & pinout auto-scanner may interface with the embedded device 10 using a JTAG interface (I/F) (SWD I/F).

The JTAG I/F(SWD I/F) may generate a boundary cell in a chip, may be connected at pins thereof to external pins in a one-to-one correspondence, and may intentionally perform an operation that can be performed by a processor through an intermediate cell.

The JTAG I/F (SWD I/F) may be a debugging device that interfaces with the embedded device 10 based on JTAG.

Further, the method for dynamic binary analysis on a hardware board according to the embodiment of the present invention may generate information required for dynamic binary analysis at step S220.

That is, at step S220, core information, registry information, and binary information, which are required for dynamic binary analysis, may be generated from the information collected while interfacing with the embedded device 10 based on JTAG.

Here, the core information may be type information and detailed information on the CPU 11 of the embedded device 10, and may be indicated by CORE_Info.

The registry information may be register information required for dynamic binary analysis, and may be indicated by REG_Info.

REG_Info may include information about the initial value of an identified core.

Here, REG_Info may be collected registry information stored in the flash memory 12 of the embedded device 10.

For example, when the identified core platform is an ARM, REG_Info may include information indicating that a core uses 16 registers, and may also include information about the initial values of the 16 registers.

Here, the binary information may be binary information required for dynamic analysis, and may be indicated by RAM_dump_binary.

RAM_dump_binary may be information that is generated by the information generation unit 111 by collecting binaries (binary code or files) in the SDRAM 13 of the embedded device 10.

That is, at step S220, the dynamic binary analysis apparatus 100 may generate the core information, the registry information, and the binary information, which are required for dynamic binary analysis, based on the information collected from the CPU 11, the flash memory 12, and the SDRAM 13 of the embedded device 10 while interfacing with the embedded device 10 using the debugging device.

Here, at step S220, the hardware interface unit 112 may deliver the core information, the registry information, and the binary information to the software processing unit 120 while interfacing with the software processing unit 120.

Further, the method for dynamic binary analysis on a hardware board according to the embodiment of the present invention may perform disassembly at step S230.

That is, at step S230, the core information, the registry information, and the binary information may be disassembled.

Here, at step S230, the software processing unit 120 may receive the core information, the registry information, and the binary information.

For example, at step S230, the core information CORE_Info, the registry information REG_Info, and the binary information RAM_dump_binary may be delivered from the hardware processing unit 110 using any one of serial communication, TCP/IP socket networking, and a Remote Procedure Call (RPC).

Here, at step S230, the core information, the registry information, and the binary information may be disassembled, and step S230 may play important roles in interpreting core instructions and determining a bare machine based on the results of the disassembly.

At step S230, embedded core platforms such as ARM, MIPS, PPC, and SH platforms may be interpreted.

Here, at step S230, in order for a bare machine platform to interpret the core information, the registry information, and the binary information, disassembly may be performed.

Further, the method for dynamic binary analysis on a hardware board according to the embodiment of the present invention may select the core platform of the embedded device 10 at step S240.

That is, at step S240, the core platform may be selected based on the results of the disassembly.

Here, at step S240, the core platform of the embedded device 10 may be selected by mapping the results of the disassembly to pieces of platform information pre-stored in the bare machine platform.

At this time, the core platform that can be selected at step S240 may be any of core platforms, such as ARM, MIPS, PPC and SH platforms.

At step S240, the bare machine selector may dynamically select the core platform of the bare machine platform while operating in conjunction with the interpreter.

That is, at step S240, a matching core platform obtained by individually mapping the core information of the CPU 11, the registry information of the flash memory 12, and the binary information of the SDRAM 13 to each of the pieces of platform information may be selected as the core platform of the embedded device 10.

Next, the method for dynamic binary analysis on a hardware board according to the embodiment of the present invention may analyze security vulnerabilities at step S250.

That is, at step S250, security vulnerabilities in the embedded device may be analyzed through dynamic binary analysis of the core platform.

At step S250, security vulnerabilities in the embedded device may be analyzed by performing dynamic binary analysis using at least one of a taint analysis technique and a concolic execution technique for the core platform.

The concolic execution technique may include a symbolic execution technique and a concrete execution technique.

Here, step S250 may be configured to analyze security vulnerabilities using a V-DB or to verify secure coding using an S-DB, with respect to an identified core while operating in conjunction with the rule-DB module 332.

Further, at step S250, dynamic binary analysis information, the dynamic binary analysis procedure, and the results of analysis thereof may be displayed through the user interface unit 130.

FIG. 5 is a diagram illustrating in detail the apparatus for dynamic binary analysis on a hardware board, which analyzes security vulnerabilities in an embedded device, according to an embodiment of the present invention.

Referring to FIG. 5, the dynamic binary analysis apparatus 100 according to an embodiment of the present invention may include a hardware part (advanced ICE/ICD device) 310, a software part (embedded DBA device) 320, and a user interface part (GUI & DB) 330.

It can be seen that, for dynamic binary analysis, the embedded device 10, which interfaces with the dynamic binary analysis apparatus 100, may include a CPU/MCU 11, flash memory 12, and SDRAM 13.

The advanced ICE/ICD device 310 may include a logic & pinout auto-scanner 311, a target interfacing module 312, an A-ICD operating module 313, a core information (Info) generator 314, and an HW I/F module 315.

The logic & pinout auto-scanner 311 may interface with the embedded device 10 by automatically scanning the embedded device 10 using a JTAG I/F (SWD I/F).

The JTAG I/F (SWD I/F) may be a debugging device that interfaces with the embedded device 10 based on JTAG.

The JTAG I/F (SWD I/F) may generate a boundary cell in a chip, may be connected at pins thereof to external pins in a one-to-one correspondence, may generate a channel, and may enable the dynamic binary analysis apparatus 100 to interface with the embedded device 10 based on the JTAG through the channel.

The target interfacing module 312 may interface with the CPU 11, the flash memory 12, and the SDRAM 13 of the embedded device 10.

The A-ICD operating module 313 may perform the overall operation of the advanced ICE/ICD device.

The core information generator 314 may generate core information CORE_Info, registry information REG_Info, and binary information RAM_dump_binary, which are required for dynamic binary analysis, from the information collected from the embedded device 10 while interfacing with the embedded device 10.

CORE_Info may include type information and detailed information on the CPU 11.

REG_Info may include information about the initial value of an identified core.

For example, when the identified core platform is ARM, REG_Info may include information indicating that a core uses 16 registers, and may also include information about initial values of the 16 registers.

RAM_dump_binary may be information obtained by dynamically collecting binaries (binary code or files) in the SDRAM 13 of the embedded device 10.

The HW I/F module 315 may deliver the core information CORE_Info, the registry information REG_Info, and the binary information RAM_dump_binary to the software part while interfacing with the SW I/F module 321.

The HW I/F Module 315 may deliver the core information CORE_Info, the registry information REG_Info, and the binary information RAM_dump_binary to the SW I/F module 321 using any one of serial communication, TCP/IP socket networking, and a Remote Procedure Call (RPC).

The embedded DBA device 320 may select the core platform of the embedded device 10 by disassembling the core information CORE_Info, the registry information REG_Info, and the binary information RAM_dump_binary, and may analyze security vulnerabilities in the embedded device 10 through dynamic binary analysis of the core platform.

Here, the embedded DBA device 320 may include the SW I/F module 321, an interpreter 322, a bare machine selector 323, a taint analyzer 324, and a concolic executor 325.

The SW I/F module 321 may receive the core information CORE_Info, the registry information REG_Info, and the binary information RAM_dump_binary from the HW I/F module 315 using any one of serial communication, TCP/IP socket networking, and a Remote Procedure Call (RPC).

The interpreter 322 may disassemble the core information CORE_Info, the registry information REG_Info, and the binary information RAM_dump_binary, and may then play important roles in interpreting core instructions and in determining a bare machine based on the results of the disassembly.

The interpreter 322 may interpret embedded core platforms such as ARM, MIPS, PPC, and SH platforms.

The bare machine selector 323 may select the core platform of the embedded device 10 by mapping the results of the disassembly to pieces of platform information pre-stored in the bare machine platform.

Here, the bare machine selector may select the core platform from the bare machine platform with respect to the identified core of the embedded device 10.

Here, the core platform that can be selected by the bare machine selector 323 may correspond to any of embedded core platforms such as ARM, MIPS, PPC and SH platforms.

The bare machine selector 323 may dynamically select the core platform of the bare machine platform while operating in conjunction with the interpreter 322.

That is, the bare machine selector 323 may select, as the core platform of the embedded device 10, a matching core platform obtained by individually mapping the core information of the CPU 11, the registry information of the flash memory 12, and the binary information of the SDRAM 13 to each of the pieces of platform information.

The taint analyzer 324 and the concolic executor 325 may analyze security vulnerabilities in the embedded device through dynamic binary analysis of the core platform.

Here, the taint analyzer 324 and the concolic executor 325 may analyze security vulnerabilities in the embedded device by performing dynamic binary analysis using at least one of a taint analysis technique and a concolic execution technique for the core platform.

The concolic execution technique may include a symbolic execution technique and a concrete execution technique.

The user interface part 330 may display dynamic binary analysis information and the dynamic binary analysis procedure to a user, and may control the dynamic binary analysis apparatus while interacting with the user.

Here, the user interface part 330 may include a GUI module 331 and a rule-DB module 332.

The GUI module 331 may display and perform the setting, running, and logging of hardware and software.

The rule-DB module 332 may include a DB for analyzing security vulnerabilities and verifying secure coding.

Here, the rule-DB module 332 may include a Vulnerability Database (V-DB) and a Secure coding DB (S-DB).

The V-DB may include DBs for analyzing security vulnerabilities for respective core platforms.

The S-DB may include DBs for verifying secure coding for respective core platforms.

Therefore, the taint analyzer 324 may analyze security vulnerabilities using the V-DB or verify secure coding using the S-DB with respect to the identified core while operating in conjunction with the rule-DB module 332.

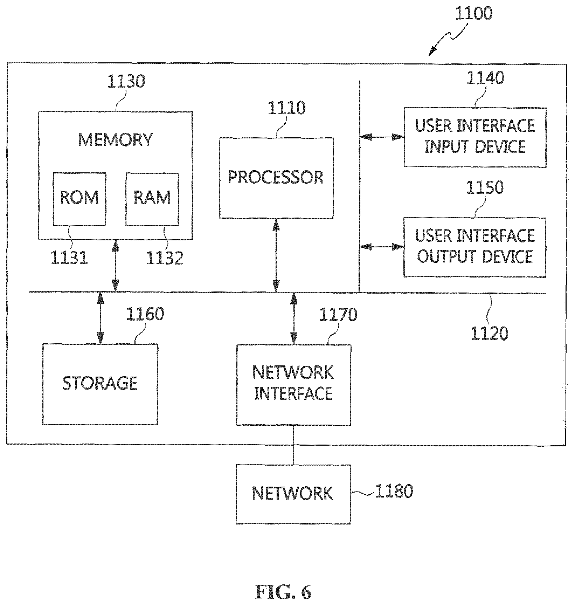

FIG. 6 is a block diagram illustrating a computer system according to an embodiment of the present invention.

Referring to FIG. 6, an embodiment of the present invention may be implemented in a computer system 1100, such as a computer-readable storage medium. As illustrated in FIG. 6, the computer system 1100 may include one or more processors 1110, memory 1130, a user interface input device 1140, a user interface output device 1150, and storage 1160, which communicate with each other through a bus 1120. The computer system 1100 may further include a network interface 1170 connected to a network 1180. Each of the processors 1110 may be a CPU or a semiconductor device for executing processing instructions stored in the memory 1130 or the storage 1160. Each of the memory 1130 and the storage 1160 may be any of various types of volatile or nonvolatile storage media. For example, the memory 1130 may include Read-Only Memory (ROM) 1131 or Random Access Memory (RAM) 1132.

As described above, the present invention may provide a method for dynamic binary analysis on a hardware board in order to analyze security vulnerabilities in an IT device.

Further, the present invention may integrate an existing In-Circuit Debugger (ICD) device with a Dynamic Binary Analysis (DBA) device so that they operate in conjunction with each other by adding a module which combines the existing ICD device with the DBA device, thus analyzing security vulnerabilities in an embedded device.

Furthermore, the present invention may provide an integrated framework for solving problems such as insufficiency of skilled professionals, limited analysis time, the requirement for the understanding of various individual devices, and the acquisition of usage methods, upon analyzing security vulnerabilities in an embedded device.

As described above, in the apparatus and method for dynamic binary analysis on a hardware board according to the present invention, the configurations and schemes in the above-described embodiments are not limitedly applied, and some or all of the above embodiments can be selectively combined and configured so that various modifications are possible.

## Claims

1. A method for dynamic binary analysis on a hardware board, the method being performed using an apparatus for dynamic binary analysis on the hardware board, comprising:
generating information required for dynamic binary analysis based on information collected while interfacing with an embedded device;
disassembling, by a software processing unit, the information required for dynamic binary analysis by receiving the information from a hardware processing unit while interfacing with the hardware processing unit;
selecting a core platform of the embedded device based on results of the disassembly; and
analyzing security vulnerabilities in the embedded device by performing dynamic binary analysis of the core platform.

2. The method of claim 1, wherein generating the information is configured to generate core information, registry information, and binary information of the embedded device based on the collected information.

3. The method of claim 2, wherein the core information includes type information and detailed information on a Central Processing Unit (CPU) of the embedded device.

4. The method of claim 3, wherein the registry information is registry information stored in flash memory of the embedded device and includes information about a number of registers used by the CPU of the embedded device and initial values of the registers.

5. The method of claim 4, wherein the binary information is generated by collecting binaries stored in Synchronous Dynamic Random Access Memory (SDRAM) of the embedded device.

6. The method of claim 5, wherein generating the information is configured to generate the core information, the registry information, and the binary information, which are required for dynamic binary analysis, based on information collected by the apparatus for dynamic binary analysis from the CPU, the flash memory, and the SDRAM of the embedded device while interfacing with the embedded device using a debugging device.

7. The method of claim 6, wherein disassembling the information is configured to perform the disassembly in order for a bare machine platform to interpret the core information, the registry information, and the binary information.

8. An apparatus for dynamic binary analysis, comprising:
a hardware processing unit for generating information required for dynamic binary analysis from information collected from an embedded device; and
a software processing unit for selecting a core platform of the embedded device by disassembling the information required for dynamic binary analysis, and for analyzing security vulnerabilities in the embedded device through dynamic binary analysis of the core platform.

9. The apparatus of claim 8, wherein the hardware processing unit comprises:
an information generation unit for generating the information required for dynamic binary analysis from the information collected while interfacing with the embedded device; and
a hardware interface unit for delivering the information required for dynamic binary analysis to the software processing unit while interfacing with the software processing unit.

10. The apparatus of claim 9, wherein the software processing unit comprises:
a software interface unit for receiving the information required for dynamic binary analysis from the hardware processing unit while interfacing with the hardware processing unit;
an interpretation unit for disassembling the information required for dynamic binary analysis;
a selection unit for selecting the core platform based on results of the disassembly; and
an analysis unit for analyzing security vulnerabilities in the embedded device through dynamic binary analysis of the core platform.

11. The apparatus of claim 10, wherein the information generation unit generates core information, registry information, and binary information of the embedded device based on the collected information.

12. The apparatus of claim 11, wherein the information generation unit is configured to generate the core information, the registry information, and the binary information, which are required for dynamic binary analysis, based on information collected by the apparatus for dynamic binary analysis from a CPU, flash memory, and SDRAM of the embedded device while interfacing with the embedded device using a debugging device.

13. The apparatus of claim 12, wherein the information interpretation unit performs the disassembly in order for a bare machine platform to interpret the core information, the registry information, and the binary information.

14. The apparatus of claim 13, wherein the selection unit is configured to select the core platform of the embedded device by mapping results of the disassembly to pieces of platform information pre-stored in the bare machine platform.

15. The apparatus of claim 14, wherein the selection unit is configured to select, as the core platform of the embedded device, a matching core platform obtained by individually mapping core information of the CPU, registry information of the flash memory, and binary information of the SDRAM to each of the pieces of platform information.
